# EUROPEAN PATENT SPECIFICATION

(11) **EP 4 166 829 B1**
(45) Date of publication and mention of the grant of the patent: **22.04.2026**
(21) Application number: 21202342.8
(22) Date of filing: 13.10.2021
(51) Int. Cl.: F16K 27/02, F16K 31/06, F16K 27/00

(54) **PRE-ASSEMBLED FIXATION DEVICE WITH SNAP-LOCK**
VORMONTIERTE BEFESTIGUNGSVORRICHTUNG MIT SCHNAPPVERSCHLUSS
DISPOSITIF DE FIXATION PRÉ-ASSEMBLÉ AVEC FERMETURE À RESSORT

(43) Date of publication of application: 19.04.2023
(73) Proprietor: ZF CV Systems Europe BV, 1170 Brussels (BE)
(72) Inventor: OBOROWSKI, Przemyslaw, 59-830 Olszyna (PL)
(74) Representative: Ohlendorf, Henrike

(56) References cited:
- EP-A2- 1 437 532
- DE-A1- 19 644 963
- FR-A1- 3 095 627
- GB-A- 1 459 470
- JP-A- S61 154 018
- US-A- 4 100 519
- US-A1- 2013 105 216
- US-A1- 2020 384 233
- US-B1- 6 170 516
- US-B1- 6 273 122

## Description

The invention relates to a valve fixation device for fixing solenoid valves to a valve block, in particular a valve block for automated manual transmission, the fixation device comprising: a plate body having a air exhaust opening for granting access to said solenoid valves, at least a first leg at a first side of said plate body extending substantially perpendicular therefrom, and at least a second leg at a second side of said plate body opposite said first side extending substantially perpendicular therefrom, wherein the first leg and the second leg are configured to attach said solenoid valves. Moreover, the invention relates to a solenoid valve arrangement comprising such a valve fixation device, a commercial vehicle comprising a solenoid valve arrangement of the aforementioned type and a method for mounting such a solenoid valve arrangement.

Valve arrangements according to the aforementioned type are used in automated manual transmissions in personal vehicles or commercial vehicles. Automated manual transmission can be automatic or semi-automatic and can be activated by different actuators. In the present case, the automated manual transmission is activated by solenoid valves which are arranged in a valve block.

When mounting such solenoid valves to the valve block, it is important to clamp those solenoid valves with the correct clamping force against the valve block. The prior art uses a fixation plate having a plate body which is screwed against the solenoid valves, for fixing them to the valve body. To limit the clamping force, for each screw a respective bushing is provided. In typical arrangements, 5 to 8 solenoid valves may be provided in one row, for example 7, and typical arrangement include two of those rows. For fixing the solenoid valves to the valve block, for each solenoid valve at least one screw is provided. Thus, in case where 14 solenoid valves are to be clamped against the valve body, 28 screws are required. Thus, in the prior art, also 28 bushings are required and each of the 28 screws has to be screwed against the valve block using the correct and respective clamping force.

A drawback in the prior art in particular lies in the tolerance chain for each of the solenoid valves. Each solenoid valve has a tolerance with the valve block and bushings are provided for each solenoid valve 2. Each bushing has a tolerance when seating against the valve block and a second tolerance between the bushings and the plate body. Then, a further tolerance is between the respective screws and the valve body, which in total can result in different clamping forces between different solenoid valves, even though the same torque is used. The content of EP 20196179.4 discloses a valve fixation device for a set of solenoid valves providing a simplified mounting process and a reduced tolerance chains. However, there is still a need to simplify the mounting process. The known valve fixation device has to be securely attached to the valve body by means of threaded screws to enable the soldering of e.g. a flex foil to the solenoid valves. Thus, a subsequent attachment of further components on the plate body requires a detachment of the threaded screws engaging the valve fixation device between the first leg and the second leg at the plate body. In situations, when the threaded screws are detached, the set of solenoid valves is fixed to the valve block by means of clamping forces.

US2020384233A1 relates generally to product manifolds and, in particular, to product manifolds for use with portable oxygen concentrators and portable oxygen concentrators including such product manifolds.

US6170516B1 discloses a solenoid valve fixing structure according to the preamble of claim 1 for fixing a solenoid valve to an intake manifold of an engine.

DE19644963A1 discloses an electronic regulating unit that fits into a housing and a base plate section, divided into a chamber for the electronic regulating unit and a chamber where the electromagnetic force is produced. US6273122B1 relates to a magnetic valve and, more particularly, to a magnetic valve for a module for an electrohydraulic gear unit controller, which can be arranged in a multipart housing and which comprises a valve subassembly and a coil-part group.

Moreover, one of the objectives of the present invention is to provide a simpler valve block that has means for mounting said solenoid valves while providing an easier access to solder flex foil on to said solenoid valves' junction points.

According to a first aspect of the invention, the problem is solved by a valve fixation device with the features of claim 1. In particular, in that said first leg has a snap-fit element configured to engage a corresponding snap-fit interface when in a mounted state, wherein the snap-fit interface is provided at a side portion of said valve block extending substantially parallel to the first leg when in the mounted state.

In accordance with an exemplary illustration, by providing the valve fixation device as per claim 1, the electrical connectors are provided with an easier access from the outside as they protrude externally from a plate body (see e.g., element '18' in the accompanying figures). A skilled person would appreciate such access to the electrical connectors protruding outside the plate body enables easier soldering procedure to attach a flex foil that extends from a printed circuit board (PCB) used in a gearbox actuator or transmission actuator.

It will be understood that in the mounted state, the at least one solenoid valve, the valve fixation device, and the valve block are preassembled and a snap-fit connection is provided by the snap-fit interface of the valve block and the snap-fit element of the first leg.

It is within the scope of the invention that a valve fixation device is either provided for each solenoid valve of a solenoid valve arrangement or for a number of solenoid valves, e.g., a row of solenoid valves. In cases, when a single valve fixation device is provided for a number of solenoid valves, it can be either provided that for each and every solenoid valve a respective pair of first and second legs is provided or that only one, two, three or four pairs of first and second legs are provided in total. Preferably, the first and second legs are parallel to each other and thus include with the substantially plate-shaped body a rectangular angle. Preferably, the legs are each substantially straight and arranged such that a clamping force is parallel to the direction in which the first and second legs are extending.

The first length of the first leg and the second length of the second leg are preferably measured with respect to the plate body and perpendicular to the plate body. The first and second lengths of the first and second legs define a distance between the plate body and the valve block.

It is preferred that said first and second legs extend substantially completely along said first and second sides of said plate body, respectively. Thus, said first and/or second legs preferably extend along the whole width of said plate body. The solenoid valves are preferably arranged in a row and the plate body covers all of the solenoid valves. The width direction of the plate body thus is the direction of aligning those solenoid valves. The first and second legs thus extend preferably along the whole row of solenoid valves, each leg on one side of the solenoid valves. It could also be provided that only two pairs of first and second legs are provided, which in this case preferably are arranged at end portions in width direction of the plate body.

It is further preferred, that the first leg and the second leg are integrally formed with said plate body. Thus, the part count is reduced and therefore the mounting process is greatly simplified. Further, an integral formed valve fixation device reduces the risk of undesired breakage along the mounting interfaces.

The term "integrally formed" in this instance can mean that the first and second legs are attached to the plate body e.g. by welding, gluing or soldering, but preferably means that the plate body and the first and/or second legs are made from one piece and formed in a one-piece construction. In this instance, it is preferred that the plate body, the first leg and the second leg are formed from one metal plate by means of bending. The metal plate, out of which the plate body, the first and second legs are made, first comes in a flat shape and then from first and second sides of this metal plate, the first and second legs are bent into their final direction. This allows for a simple manufacturing process and reliably avoids at least one of the tolerances, and achieves a stiff overall construction.

The metal is preferably a steel, in particular a low carbon steel providing sufficient stiffness and elasticity. It is also within the scope of the invention that the valve fixation device is formed of a polymer, a composite material or a hybrid material including a mix thereof

In a preferred embodiment, the snap-fit interface is formed as a projection, which projects from said side portion of the valve block, and wherein said first leg is configured to bend outwards when moved along the projection and to rebound afterwards, such that the snap-fit element engages the projection in the mounted state. Thus, an intuitive and simplified mounting is enabled since the snap-fit element is first guided along the side portion of the valve block and rebounds and engages a recess afterwards in the mounted state.

Preferably, the snap-fit element is formed as a recess provided in the respective first leg of the valve fixation device. This recess can be placed anywhere in the first leg and have any form and size sufficient to at least partly receive the projection in the mounted state. A snap-fit interface that is formed as a recess provides low manufacturing costs due to the simple manufacturing.

In a further preferred embodiment, the snap-fit interface is formed as a recess provided in the respective side portion of the valve block, and the first leg having a snap-fit element is configured to at least partly bend outwards when moved along said side portion of the valve block and to rebound afterwards such that the snap-fit element engages the recess in the mounted state. As described above, a recess is simple to manufacture and thus may result in low manufacturing costs. Further, an intuitive and simplified mounting can be enabled.

It is preferred that the snap-fit element is formed as a projection, which projects from the first leg to the opposite side of the plate body. It will be understood that by projecting from the first leg to the opposite side of the plate body, the projection will face the side portion of the valve body in the mounted state. Thus, the projection can easily engage a recess or a corresponding projection in the mounted state. When moving the valve fixation device along the side portion of the valve body into said mounted state, the first leg will preferably bend outwards before the first leg rebounds and the projection engages the respective snap-fit interface.

In a further preferred embodiment, the snap-fit element is a first snap-fit element provided at the first leg and the snap-fit interface is a first snap-fit interface provided at a first side portion of the valve block, and wherein said second leg has a second snap-fit element configured to engage a corresponding second snap-fit interface when in the mounted state, wherein said second snap-fit interface is provided at a second side portion of said valve block opposite the first side portion. Thus, the fixation of the solenoid valve and the application of forces between the valve fixation device and the valve block is more uniform.

Preferably, said first leg has a first length and said second leg has a second length for attaching said solenoid valve. Preferably, said first leg comprises a first abutment surface for abutting against said valve block when in the mounted state, and said second solenoid valve comprises a second abutment surface for abutting against said valve block in the mounted state. Thus, the first and second lengths of the first and second legs form a stop for the plate body, when fixing the plate body against the valve block and thus, also limit a force by which the solenoid valves are clamped against the valve block. In case third, fourth and so forth legs are provided, their respective lengths are preferably set accordingly.

It is preferred that the valve block has a first stop corresponding to the first abutment surface and being provided at a first side portion of the valve block, and that the valve block further has a second stop corresponding to the second abutment surface and being provided at the second side portion of the valve block. The first stop is configured to receive the first abutment surface and the second stop is configured to receive the second abutment surface. Thus, the positioning of the valve fixation device is predefined and the forces acting on the solenoid valve by the valve fixation device are limited.

It is preferred that the plate body, the first leg and the second leg are formed from one metal plate by means of bending. The metal plate, out of which the plate body, the first and second legs are made, first comes in a flat shape and then form first and second sides of this metal plate, the first and second legs are bent into their final direction. This allows for a simple manufacturing process and reliably avoids at least one of the tolerances, and also achieves a stiff overall construction.

According to the present invention, the plate body comprises a spring biased lash for contacting said solenoid valves. Further, according to the present invention, that the plate body comprises at least two spring biased lashes. The one or more lashes may help to keep the clamping force in a predetermined certain range, so not to exceed a desired clamping force. The one or more lashes can be formed integrally with the plate body, preferably by means of blanking. The whole valve fixation device can be formed by means of blanking and bending. The one or more lashes are preferably arranged adjacent to the opening.

Further, it is preferred that the valve fixation device comprises at least one through hole for receiving a screw for screwing said valve fixation device to said valve block. This through hole could be placed anywhere, in particular in the plate body, the first leg, or the second leg. If the through hole is placed in the first or the second leg, the first and/or the second leg are preferably provided with a respective screwing lash or screwing tongue which is attached to and projects from the first and/or second leg.

Preferably, a plurality of through holes for a plurality of screws is provided. Preferably, at least four of those through holes are provided to provide a clamping force, which is substantially evenly distributed over the plate body.

Preferable, the plurality of through holes is provided in the plate body, so that the through holes are between the first and second legs. Due to such an arrangement, the first and the second legs may protect the screws provided through the through holes and therefore secure the device further. Moreover, this may prevent service personnel to contact the screws and/or solenoid valves. Thus, also safety may be increased, and also the solenoid valves may be better protected from the environment by means of the first and second legs.

According to a preferred embodiment of the solenoid valve arrangement, the valve block comprises a first guide for receiving said first leg and a second guide for receiving said second leg. The first and the second guides preferably form processed contacting surfaces which are within tolerances for receiving the first and second legs. Moreover, the first and second guides also preferably provide lateral support for the first and second legs, so that movement of the first and second legs to lateral directions is prevented. The first and second guides in the valve block may be formed as recesses, grooves, slots or the like.

According to a second aspect of the invention, the above-mentioned problem is solved by a solenoid valve arrangement for automated manual transmission, comprising: a valve block having a snap-fit interface, a plurality of solenoid valves received in respective recesses of said valve block, and at least one valve fixation device according to any of the preceding claims attached to said valve block by a snap-fit connection between the snap-fit element and the corresponding snap-fit interface, wherein the snap-fit interface is provided at a side portion of said valve block extending substantially parallel to the respective first leg of said valve fixation device when in the mounted state.

It shall be understood that the valve fixation device according to the first aspect of the invention and the solenoid valve arrangement according to the second aspect of the invention have similar and identical preferred embodiments which are in particular described in the dependent claims. In so far, reference is made to the above description of the first aspect of the invention and the preferred features and benefits are fully incorporated herein.

The valve block is preferably formed as a casting part, or formed from a plastic material which comprises the respective channels and conduits which are set into communication by means of the solenoid valves. Moreover, the valve block may comprise interfaces for attaching the solenoid valve arrangement to the car body or car frame, and also may comprise interfaces for supplying the solenoid valves with power. Typically, the valve block comprises two rows of solenoid valves, wherein only one row of solenoid valves is described herein. It shall, however, be understood that when the valve block includes two rows of solenoids, the solenoid valve arrangement also may comprise a second valve fixation device of the aforementioned type cooperating with the second row of solenoid valves received in respective second rows of recesses in the valve block.

In a preferred embodiment, the snap-fit interface is formed as a projection being inclined to the respective side portion of the valve block and projecting therefrom, such that the respective first leg having the snap-fit element is initially bent outwards in a continuously increasing manner, when moved along the projection and rebounds afterwards such that the snap-fit element engages a projection in the mounted state. The projection thus projects to the respective one of the first or second legs having the snap-fit element when in a mounted state. By bending the first leg in a continuously increasing manner due to the inclination of the projection, the probability of breakage is decreased and the service live of the valve fixation device is increased, when compared to a sudden and rapid bending of said leg.

According to a further preferred embodiment, the valve block comprises a plurality of screw threaded bores corresponding to said plurality of through holes in said plate body for receiving screws provided through said through holes.

According to a third aspect of the invention, the above-mentioned problem is solved by a commercial vehicle comprising a solenoid valve arrangement according to any of the previously described embodiments of a solenoid valve arrangement according to the second aspect of the invention. Such a commercial vehicle preferably comprises an automated manual transmission and a pneumatic braking system, as well as a pressurized air supply.

It shall be understood that the commercial vehicle according to the third aspect of the invention, the solenoid valve arrangement according to the second aspect of the invention and the valve fixation device according to the first aspect of the invention comprise similar and identical embodiments which are in particular described in the dependent claims. In so far, reference is made to the above description of the valve fixation device according to the first aspect of the invention and the solenoid valve arrangement according to the second aspect of the invention.

According to a fourth aspect of the invention, the above-mentioned problem is solved by a method for mounting a solenoid valve arrangement according to the second aspect, the method comprising the steps: arranging at least one of a plurality of solenoid valves in a recess of a valve block, fixing the solenoid valve to the valve block by a valve fixation device according to the fist aspect, soldering a flex foil to the solenoid valve, and securely attaching the solenoid valve to the valve block by a plurality of screw threaded bores corresponding to a plurality of through holes in said plate body for receiving screws provided through said through holes. It shall be understood that the method for mounting a solenoid valve arrangement and the valve arrangement according to the second aspect of the invention has similar and identical preferred embodiments, which are in particular described in the dependent claims. Insofar, reference is made to the above description of the second aspect of the invention and the preferred features and benefits are fully incorporated herein.

In a preferred embodiment, the method further comprises the step of mounting a functional component to the plate body before securely attaching the solenoid valve to the valve body by the plurality of screws engaging the screw threaded bores. In this context, the term "functional component" refers to any components, which include any additional functionality with respect to the solenoid valve arrangement. Examples for said functional components are stiffening plates used to increase the stiffness of the plate body, an air shield for preventing the air exiting the solenoid valve and a protective plate protects the flex foil soldered to the solenoid valve.

For a more complete understanding of the invention, the invention will now be described in detail with reference to the accompanying drawings. The detailed description will illustrate and describe what is considered as a preferred embodiment of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention as defined by the appended claims. In the accompanying drawings:
- Fig. 1: shows a solenoid valve arrangement according to the prior art;
- Fig. 2: shows the solenoid valve arrangement of Fig. 1 in an exploded view;
- Fig. 3: shows a first embodiment of the valve fixation device according to the invention in a perspective view;
- Fig. 4: shows a valve block and a solenoid according to the invention in a perspective view;
- Fig. 5: shows a valve arrangement according to a first preferred embodiment in a first position in a side view;
- Fig. 6: shows the valve arrangement according to Fig. 5 in a second position in a side view;
- Fig. 7: shows the valve arrangement according to Fig. 5 in a third position in a sectional view;
- Fig. 8: shows a valve arrangement according to a second preferred embodiment in a sectional view;
- Fig. 9: shows the valve arrangement according to Fig. 8 in a perspective view;
- Fig. 10: shows a valve arrangement according to a third preferred embodiment in a sectional view; and
- Fig. 11: shows a second embodiment of the valve fixation device according to the invention in a perspective view.

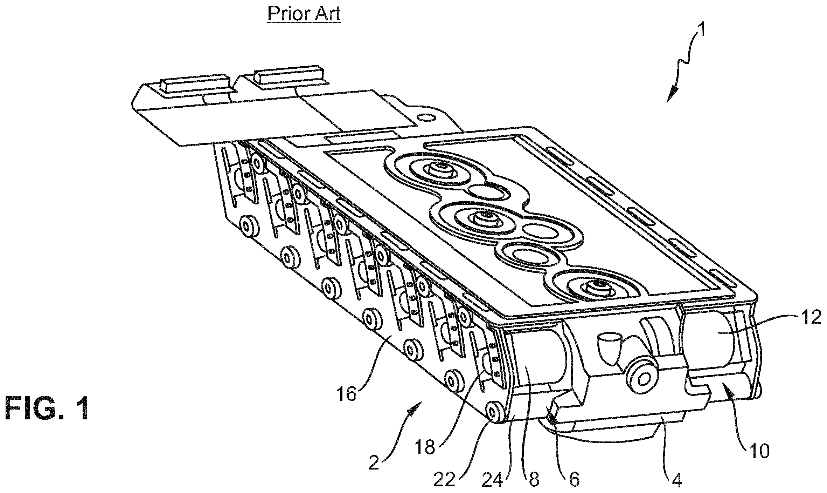

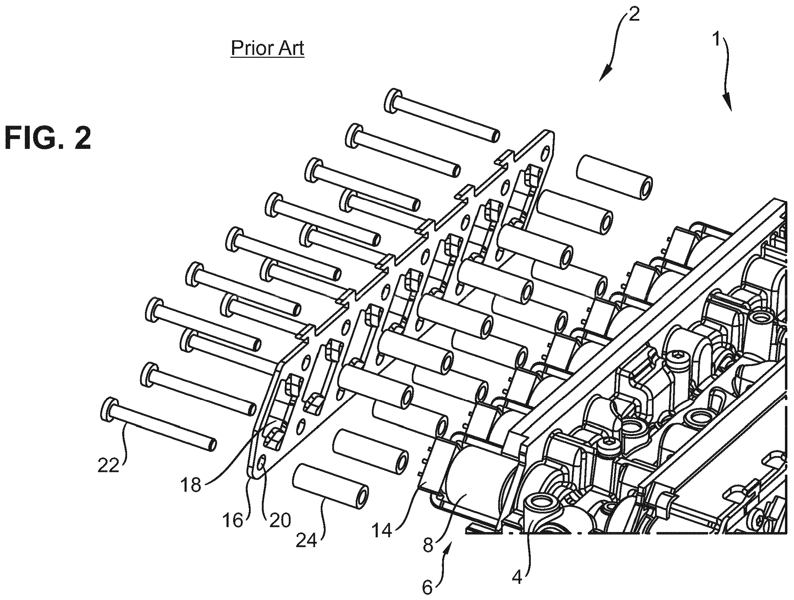

Figs. 1 and 2 describe a solenoid valve arrangement 1 with a valve fixation device 2 according to the prior art. The solenoid valve arrangement 1 according to the prior art comprises a valve block 4 with a first row 6 of solenoid valves 8, and a second row 10 of solenoid valves 12. The first and second rows 6, 10 of solenoid valves 8, 12 are arranged on opposite sides of the valve body 4 and seated in respective recesses of the valve body 4.

The exact arrangement can better be seen in Fig. 2. The valve body 4 is shown in a perspective view and seven solenoid valves 8 can be seen to be arranged at the valve body 4. Each solenoid valve 8 comprises an electric terminal 14 which is shown in Fig. 2 at the solenoid valves 8. The solenoid valves 8 are seated in the valve block 4. For clamping the solenoid valves 8 in the first row 6 against the valve body 4, a valve fixation device 2 is provided. The valve fixation device 2 comprises a plate 16 with air exhaust openings 18 through which the electrical terminal 14 is accessible. The plate 16 further comprises a plurality of through holes 20 (only one shown with reference sign) which are provided for receiving a respective screw 22 (again only one shown with reference sign) which is positionable through the through hole 20 and can be screwed into a respective (not shown) screw threaded bore in the valve block 4. For limiting the clamping force, each screw 22 is provided with a respective bushing 24 (again only one shown with reference sign in Fig. 2) which is positioned between the plate 16 and the valve block 4. Each screw 22 runs through the respective bushing 24 and is screwed to the valve block 4 with a respective port value.

Here, a drawback exists that during mounting, each of the screws and each of the bushings 24 must be aligned. In the embodiment shown, 14 screws 22 and 14 bushings 24 are used for the first row 6. For the second row 10 (not shown in Fig. 2) again 14 screws 22 and 14 bushings 24 are used. All these bushings 24 need to be placed on the respective screw 22 and placed properly between the plate 16 and the valve block 4. Each of the bushings 24 has two opposing surfaces, one surface abutting against the valve block 4 and one surface abutting against the plate 16. Thus, between the bushing 24 and the plate 16 as well as between the bushing 24 and the valve block 4, a respective tolerance is necessary which makes manufacturing complex. What is more is that each of the bushings 24 needs to be manufactured properly and sourced properly and also needs to be handled during mounting process.

In the following, similar and identical elements are identified with the same reference signs as used before. In so far, reference also is made to the beforehand description of the prior art.

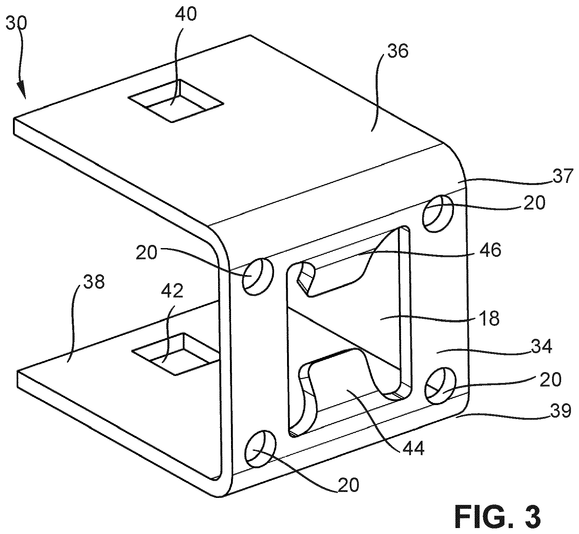

Fig. 3 shows the valve fixation device 30 according to a first preferred embodiment of the invention. The valve fixation device 30 has a plate body 34 having a first leg 36 arranged at a first side 37 of said plate body and a second leg 38 arranged at a second side 39 of said plate body.

The first leg 36 has a number of first snap-fit elements 40. It is further preferred that the second leg 38 has a number of second snap-fit element 42.

The valve fixation device 30 has an air exhaust opening 18 and a number of through holes 20 (only one shown with reference sign) provided in the plate body 34.

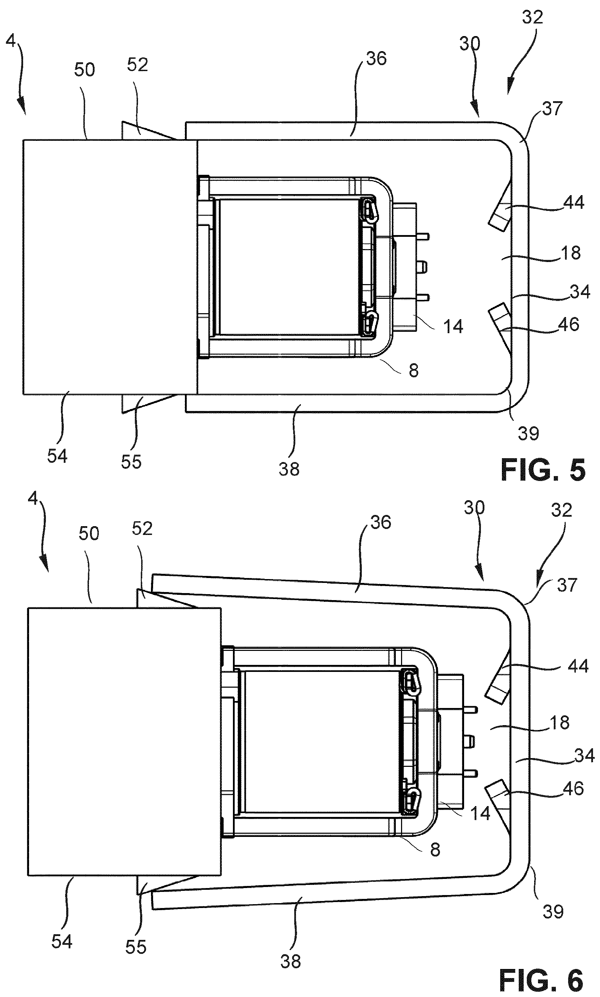

At the edges of the air exhaust opening 18, a first lash 44 and a second lash 46 are provided, which abut against an upper part of the solenoid valve 8 or an electronic terminal 14 (see Figs. 5-7) provided at the top of the solenoid valve 8, to push the solenoid valve 8 into the valve block 4. The lashes 44, 46 are spring biased and therefore may slightly flex outwardly to compensate for an excessive clamping force.

The first and second snap-fit elements 40, 42 are defined as recesses extending through the respective leg 36, 38.

Both, the first leg 36 and the second leg 38 extend substantially perpendicular to the plate body 34 and are substantially parallel to each other.

The first snap-fit element 40 and the second snap-fit element 42 are arranged in a symmetric manner to each other.

The through holes 20 are evenly distributed on the plate body 34 such that a single through hole 20 is placed in each corner of the rectangular plate body 34.

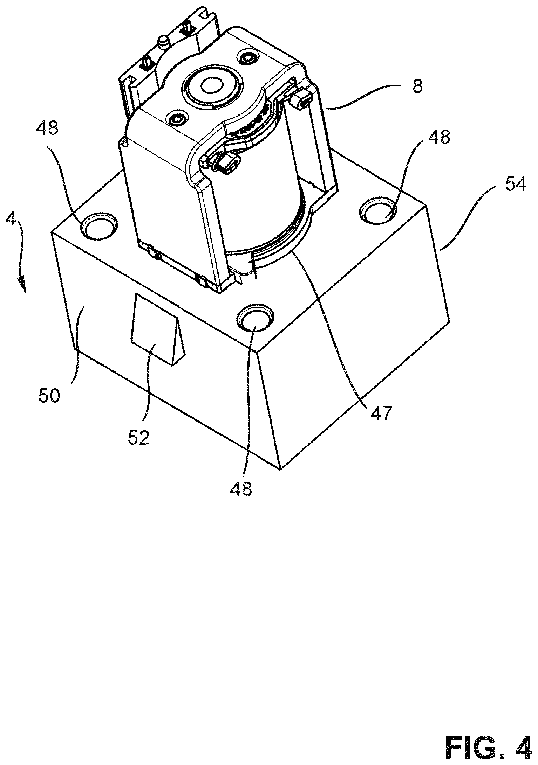

As shown in Fig. 4, the solenoid valve 8 is arranged in a recess 47 provided in the valve block 4. The valve block 4 has a number of screw threaded bores48 (only one shown with reference sign).

The valve block 4 has a first side portion 50 having a first snap-fit interface 52 and a second side portion 54 opposite to the first side portion 50 having a second snap-fit interface 55 (not shown).

The first snap-fit element 52 is formed as a projection projecting from the first side portion 50 and being inclined relative to it. The second snap-fit element 55 is formed accordingly. As such, the projections 52, 55 are configured to guide the corresponding legs 36, 38 of the valve fixation device 30 when moved along the first side portion 50 and second side portion 54 in order to attach the valve fixation device 30 to the valve block 4 in the mounted state (see Figs. 5-7).

Figs. 5-7 depict the valve arrangement 32 according to a first preferred embodiment having the valve block 4 according to Fig. 4 and the valve fixation device 30 according to Fig. 3.

Fig. 5 shows the valve fixation device 30 in a first position relative to the valve block 4.

The first leg 36 is guided by the first side portion 50, which extends substantially parallel to the extension of the first leg 36. The second leg 38 is guided by the second side portion 54, which also extends substantially parallel to the second leg 38.

Fig. 6 depicts the valve fixation device 30 in a second position relative to the valve block 4. In the second position, the first leg 36 and the second leg 38 are bent outwards by the respective inclined first and second projection 52, 55. It will be understood that during the movement of the valve fixation device 30 relative to the valve block, the first leg 36 is bent outwards in a continuously increasing manner when moving along the first snap-fit interface 52 formed as an inclined projection. The same applies for the second leg 38, which is bent outwards in a continuously increasing manner when moved along the second snap-fit interface 55 formed as an inclined projection. When bent outwards, the first leg 36 and the second leg 38 do no longer extend substantially parallel to each other.

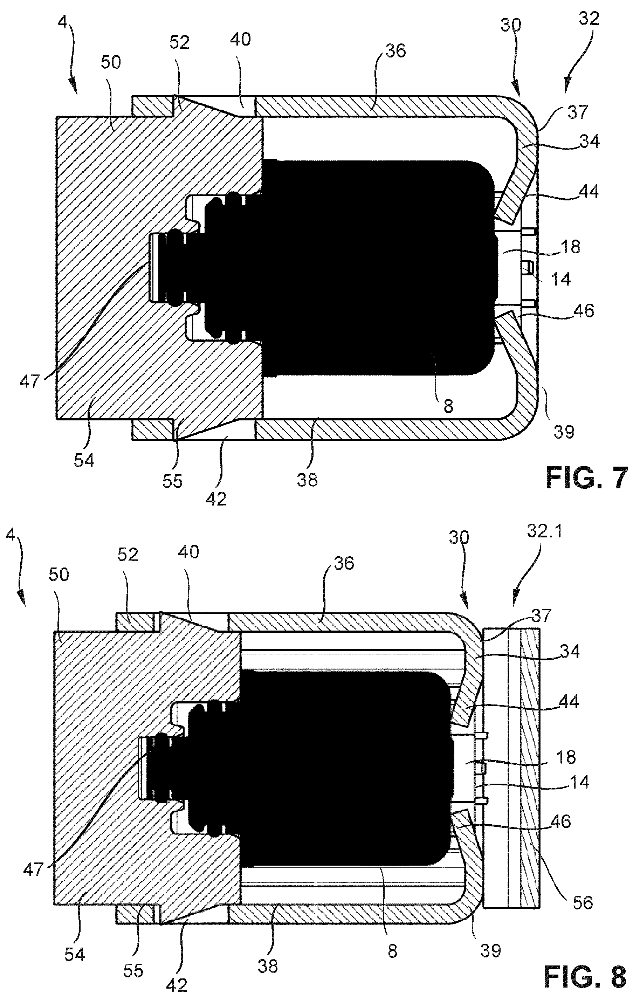

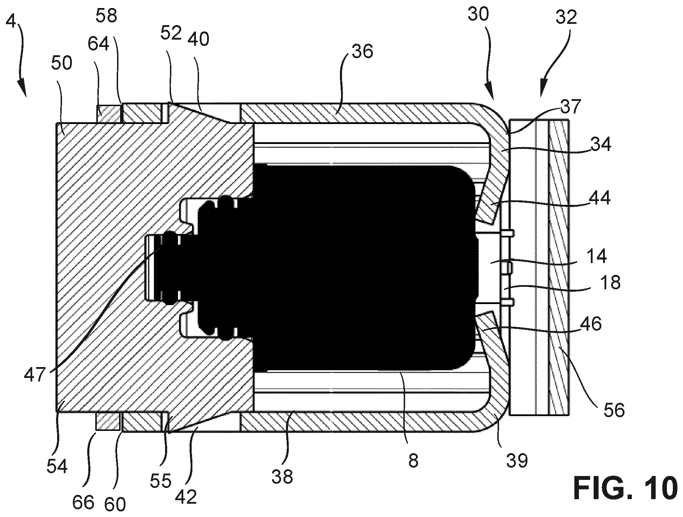

Fig. 7 depicts the valve arrangement 32 in the mounted state. The first leg 36 and the second leg 38 preferably rest against the respective first side portion 50 and second side portion 54 of the valve block 4. The first snap-fit element 40 and the first snap-fit interface 52 are engaged with each other by a snap-fit connection. The second snap-fit element 42 and the second snap-fit interface 55 are engaged with each other in a snap-fit connection. The first leg 36 and the second leg 38 extend substantially parallel to each other and to the first side portion 50 and the second side portion 54 of the valve block 4. The first lash 44 and the second lash 46 abut against an upper part of the valve 8, in particular an electronic terminal 14 provided on the top of the solenoid valve 8, thereby pushing the valve 8 into the respective recess 47 of the valve block 4. The lashes 44, 46 thereby limit the axial movement of the valve 8 in the axial direction L (see Fig. 10) when the valve fixation device 30 is attached to the valve block 4. As further shown in Fig. 7, the size of the first and second snap-fit elements 40, 42 defined by the recesses have an axial extension exceeding the axial extension of the corresponding snap-fit interfaces 52, 55 in the direction of the longitudinal axis L (see Fig. 10). Thus, a tolerance between the valve fixation device 30 and the valve block 4 is provided and thereby enabling an adjustment of the position of the valve 8 relative to the valve block 4 in the axial direction by pushing the valve fixation device 30 towards the valve block 4.

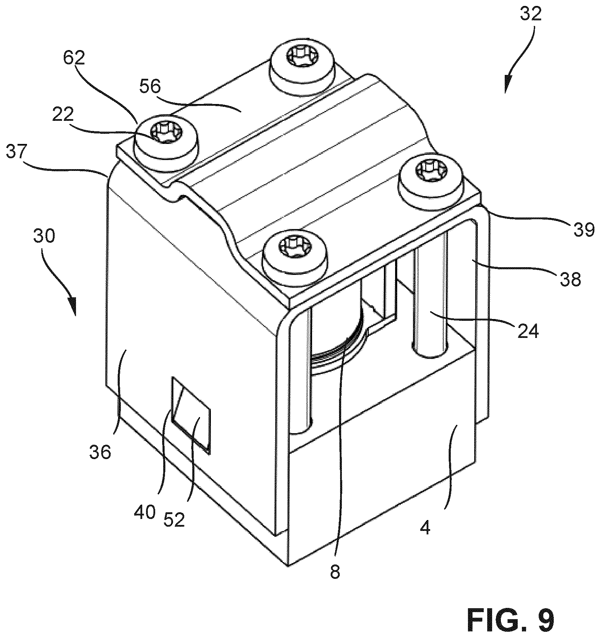

Figs. 8 and 9 show a second preferred embodiment of the valve arrangement 32. In this embodiment, a functional component 56 is mounted onto the plate body 34, thereby pushing the valve fixation device 30 towards the valve block 4.

The functional component 56 might be a stiffening plate configured to protect a flex foil soldered to the top of the valve 8, in particular to an electric terminal 14 arranged on top of the valve 8.

The functional component 56 has a number of through holes 62 (only one shown with reference sign) corresponding to the number and size of the through holes 20 provided in the plate body 34. The functional component 56 is attached to the valve fixation device 30 and thus to the valve block 4 by a number screws 22 (only one shown with reference sign) that are engaged with the through holes 62 (again, only one shown with reference sign) in the functional component 56, the through holes 20 in the plate body 34, and the screw threaded bores 48 in the valve block 4. For limiting the clamping force, each screw 22 may be provided with a respective bushing 24 (again only one shown).

Fig. 10 shows another preferred embodiment of the valve arrangement 32. The valve arrangement 32 according to Fig. 9 differs from the valve arrangement 32 shown in Figs. 5-7 and 8 in that the first leg 36 has a first abutment surface 58 for abutting against a first stop 64 when in the mounted state. The first abutment surface 58 is provided at the first side portion 50 of the valve block 4.

The valve fixation device 30 further has a second abutting surface 60 provided at said second leg 38 for abutting against a second stop 66 when in the mounted state. The second abutment surface 60is provided at the second side portion 54 of the valve block 4.

Thus, the solenoid valve 8 is protected against an undesired clamping force applied by the first and second lashes 44, 46, since the first and second abutting surface 58, 60 rest against the stops 64, 66.

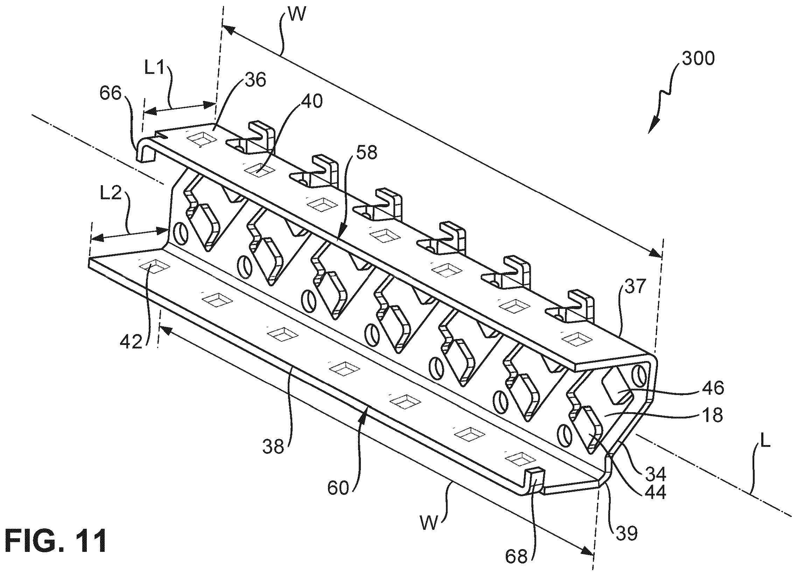

Fig. 11 shows another preferred embodiment of a valve fixation device 300.

The valve fixation device 300 comprises a plate body 34, which has a substantially rectangular or trapezoidal and longitudinal shape. The plate body 34 comprises a longitudinal axis L which, when mounted, is parallel to a first and a second row 6, 10 of solenoid valves 8, 12, as shown in Fig. 1. The plate body 34 comprises a plurality of air exhaust openings 18, which substantially are formed in accordance with the air exhaust openings 18 in the first embodiment. The air exhaust openings 18, however, depend in particular on the shape and type of the solenoid valves 8, 12 which are used and may be different for different solenoid valves incorporated (see Fig. 1).

The valve fixation device 300 comprises a first leg 36 and a second leg 38 extending from the plate body 34. The first leg 36 is formed at the first side 37 of the plate body and the second leg 38 is formed at the second side 39 of the plate body 34. As can be inferred, the plate body 34, the first leg 36, and the second leg 38 are integrally formed and in particular are made from one single metal sheet, in particular by means of bending. That is, the first leg 36 and the second leg 38 are configured to bent at the first side of the plate body 34 in a counter-clockwise direction with a bending axis parallel to the longitudinal axis L. Both, the first leg 36 and the second leg 38 extend substantially perpendicular to the plate body 34 and are substantially parallel to each other.

The plate body 34 has a width W along the longitudinal axis L. The first and second legs 36, 38 extend over the whole width W of the plate body 34. It shall be contemplated that also first and second legs 36, 38 can be provided which are shorter than the whole width W, or multiple pairs of first and second legs 36, 38 can be provided, e.g. corresponding pairs for each of the air exhaust openings 18.

The first leg 36 has a number of first snap-fit elements 40 (only one shown with reference sign). It is further preferred that the second leg 38 has a number of second snap-fit elements 42 (again, only one shown with reference sign). The first and second snap-fit elements 40, 42 are configured to engage a respective corresponding first snap-fit interface 52 and second snap-fit interface 55 in the manner described with regard to the first and second embodiment of the valve arrangement 32.

The first leg 36 further comprises a first abutment surface 58 and the second leg 38 comprises a second abutment surface 60. The first and second abutment surfaces 58, 60 may abut against a first and second stop (see Fig. 10) provided at the valve block 4 when in the mounted state.

For attaching the solenoid valves 8, 12 to the valve block 4, the valve fixation device 300 is seated above the solenoid valves 8, 12 in a similar manner as shown in Fig. 1 and 2. The first and second abutment surfaces 58, 60 may abut against the valve block 4 and screws 22 have to be placed through the through holes 20 in a similar manner as shown in Fig. 1 and 9 and screwed to corresponding respective screw threaded bores48 provided in the valve block 4. The first and second abutment surfaces 58, 60 extend also over the whole width W, even though this is not necessary, but this gives a full contact of the first and second legs 36, 38 and can balance out certain tolerances. Moreover, due to the first and second legs 36, 38 being substantially plate shaped, stiffness of the whole valve fixation device 300 is increased.

The first and second legs 36, 38 having first and second lengths L1, L2, respectively, which are set to a value to limit the clamping force provided by the screws 22. The first and second legs 36, 38 limit the extent to which the screws 22 may be screwed into the corresponding screw threaded bores 48 and thus limit the clamping force.

At edges of the air exhaust openings 18, first and second lashes 44, 46 are provided which push the solenoid valves 8, 12 into the valve block 4. The lashes 44, 46 are spring biased and therefore may slightly flex outwardly.

Further, a first and a second mounting tongue 66, 68 may be provided, which engage respective portions of the valve block and limit axial movement of the valve fixation device 300 into the direction of the longitudinal axis L when the valve fixation device 300 is seated over the solenoid valves 8, 12.

List of reference signs (part of the specification):
- 1: solenoid valve arrangement (prior art)
- 2: valve fixation device (prior art)
- 4: valve block
- 6: first row
- 8: solenoid valves of first row
- 10: second row
- 12: solenoid valves of second row
- 14: electrical terminal
- 16: plate
- 18: air exhaust opening
- 20: through hole
- 22: screw
- 24: bushing
- 30, 300: valve fixation device (invention)
- 32: solenoid valve arrangement (invention)
- 34: plate body
- 36: first leg
- 37: first side
- 38: second leg
- 39: second side
- 40: first snap-fit element
- 42: second snap-fit element
- 44: first lash
- 46: second lash
- 48: screw threaded bore
- 50: first side portion
- 52: first snap-fit interface
- 54: second side portion
- 55: second snap-fit interface
- 56: functional element
- 58: first abutment surface
- 60: second abutment surface
- 62: first mounting tongue
- 64: second mounting tongue
- L: longitudinal axis
- L1: first length
- L2: second length
- W: width

## Claims

1. A valve fixation device (30, 300) for fixing solenoid valves (8, 12) to a valve block (4) for an automated manual transmission, the fixation device (30, 300) comprising:
a plate body (34) having an air exhaust opening (18) for granting access to said solenoid valves (8, 12),
at least a first leg (36) at a first side (37) of said plate body (34) extending substantially perpendicular therefrom, and
at least a second leg (38) at a second side (39) of said plate body (34) opposite said first side (37) extending substantially perpendicular therefrom,
wherein the first leg (36) and the second leg (38) are configured to attach said solenoid valves (8, 12),
wherein said first leg (36) has a snap-fit element (40) configured to engage a corresponding snap-fit interface (52, 55) when in a mounted state,
wherein the snap-fit interface (52, 55) is provided at a side portion (50, 54) of said valve block (4) extending substantially parallel to the first leg (36) when in the mounted state, and wherein said plate body (34) comprises at least two spring biased lashes (44, 46), wherein the at least two spring biased lashes includes a first lash (44) and a second lash (46), **characterized in that,** the first and second lashes (44, 46) are provided at edges of said air exhaust opening (18), wherein the first and second lashes (44, 46) are configured to abut against an upper part of the solenoid valve (8) and to push the solenoid valve (8) into the valve block (4).

2. The valve fixation device (30, 300) according to claim 1,
wherein the first leg (36) and the second leg (38) are integrally formed with said plate body (34).

3. The valve fixation device (30, 300) according to any one of the preceding claims,
wherein the snap-fit interface (52, 55) is formed as a projection which projects from said side portion (50, 54) of the valve block (4), and
wherein said first leg (36) is configured to bend outwards when moved along the projection (52, 55) and to rebound afterwards such that the snap-fit element (40) engages the projection (52, 55) in the mounted state.

4. The valve fixation device (30, 300) according to claim 3,
wherein the snap-fit element (40) is formed as a recess provided in the respective first leg (36) of the valve fixation device (30, 300).

5. The valve fixation device (30, 300) according to any one of the claims 1 to 3,
wherein the snap-fit interface (52, 55) is formed as a recess provided in the respective side portion (50, 54) of the valve block (4), and
wherein the first leg (36) having the snap-fit element (40) is configured to at least partly bent outwards when moved along said side portion (50, 54) of the valve block (4) and to rebound afterwards such that the snap-fit element (40) engages the recess (52, 55) in the mounted state.

6. The valve fixation device (30, 300) according to any one of the claims 3 or 5,
wherein the snap-fit element (40) is formed as a projection which projects from the first leg (36) to the opposite side (39) of the plate body (34).

7. The valve fixation device (30, 300) according to any one of the preceding claims,
wherein the snap-fit element is a first snap-fit element (40) provided at the first leg (36) and the snap-fit interface is a first snap-fit interface (52) provided at a first side portion (50) of said valve block (4), and
wherein said second leg (38) has a second snap-fit element (42) configured to engage a corresponding second snap-fit interface (55) when in the mounted state,
said second snap-fit interface (55) is provided at a second side portion (54) of said valve block (4) opposite the first side portion (50).

8. The valve fixation device (30, 300) according to any one of the preceding claims,
wherein said first leg (36) having a first length (L1) and said second leg (38) having a second length (L2) for attaching said solenoid valve (8, 12), and
said first leg (36) comprises a first abutment surface (58) for abutting against said valve block (4) when in the mounted state, and said second leg (38) comprises a second abutment surface (60) for abutting against said valve block (4) when in the mounted state.

9. The valve fixation device (30, 300) according to any one of the preceding claims, wherein the plate body (34), the first leg (36) and the second leg (38) are formed from one metal plate by means of bending.

10. The valve fixation device (30, 300) according to any one of the preceding claims,
wherein said first leg (36) and said second leg (38) extend substantially completely along said first side (37) and said second side (39) of said plate body (34), respectively.

11. The valve fixation device (30, 300) according to any one of the preceding claims,
further comprising a plurality of through holes (20) formed in said plate body (34) for receiving screws (22) for screwing said valve fixation device (30, 300) to said valve block (4).

12. A solenoid valve arrangement (32) for automated manual transmission, comprising:
a valve block (4) having a snap-fit interface,
a plurality of solenoid valves (8, 12) received in respective recesses (47) of said valve block (4), and
at least one valve fixation device (30, 300) according to any of the preceding claims attached to said valve block (4) by a snap-fit connection between the snap-fit element (40) and the corresponding snap-fit interface (52, 55),
wherein the snap-fit interface (52, 55) is provided at a side portion (50, 54) of said valve block (4) extending substantially parallel to the respective first leg (36) of said valve fixation device (30, 300) when in the mounted state.

13. The solenoid valve arrangement (32) according to claim 12,
wherein the snap-fit interface (52, 55) is formed as a projection being inclined to the respective side portion (50, 54) of the valve block (4) and projecting therefrom, such that the respective first leg (36) having the snap-fit element (40) is initially bent outwards in a continuously increasing manner when moved along the projection (52, 55) and rebounds afterwards such that the snap-fit element (40) engages the projection (52, 55) in the mounted state.

14. The solenoid valve arrangement (32) according to claim 12 or 13, wherein said valve block (4) comprises a plurality of screw threaded bores (48) corresponding to said plurality of through holes (20) in said plate body (34) for receiving screws (22) provided through said through holes (20).

15. A commercial vehicle comprising a solenoid valve arrangement (32) according to any one of claims 12 to 14.

16. A method for mounting a solenoid valve arrangement (32) according to claim 14, the method comprising the steps:
- arranging at least one of a plurality of solenoid valves (8, 12) in a recess (47) of a valve block (4),
- fixing the solenoid valve to the valve block (4) by a valve fixation device (30, 300),
- soldering a flex foil to the solenoid valve (8, 12), and
- securely attaching the solenoid valve (8, 12) to the valve block (4) by a plurality of screw threaded bores (48) corresponding to a plurality of through holes (20) in a plate body (34) for receiving screws (22) provided through said through holes (20).

17. Method according to claim 16, further comprising the step of:
- mounting a functional component (56) to the plate body (34) before securely attaching the solenoid valve (8, 12) to the valve block (4) by the plurality of screws (20) engaging the screw threaded bores (48).

## Patentansprüche

1. Ventilbefestigungsvorrichtung (30, 300) zum Befestigen von Magnetventilen (8, 12) an einem Ventilblock (4) für ein automatisiertes Schaltgetriebe, die Befestigungsvorrichtung (30, 300) umfassend:
einen Plattenkörper (34), der eine Luftauslassöffnung (18) zum Gewähren eines Zugangs zu den Magnetventilen (8, 12) aufweist,
mindestens einen ersten Schenkel (36) an einer ersten Seite (37) des Plattenkörpers (34), der sich im Wesentlichen senkrecht davon erstreckt, und
mindestens einen zweiten Schenkel (38) an einer zweiten Seite (39) des Plattenkörpers (34) gegenüberliegend der ersten Seite (37), der sich im Wesentlichen senkrecht davon erstreckt,
wobei der erste Schenkel (36) und der zweite Schenkel (38) konfiguriert sind, um die Magnetventile (8, 12) anzubringen,
wobei der erste Schenkel (36) ein Schnappelement (40) aufweist, das konfiguriert ist, um eine entsprechende Schnappschnittstelle (52, 55) in Eingriff zu nehmen, wenn sie sich in einem montierten Zustand befinden,
wobei die Schnappschnittstelle (52, 55) an einem Seitenabschnitt (50, 54) des Ventilblocks (4) bereitgestellt ist, der sich im Wesentlichen parallel zu dem ersten Schenkel (36) erstreckt, wenn sie sich in dem montierten Zustand befinden, und wobei der Plattenkörper (34) mindestens zwei federbelastete Laschen (44, 46) umfasst, wobei die mindestens zwei federbelasteten Laschen eine erste Lasche (44) und eine zweite Lasche (46) einschließen,
**dadurch gekennzeichnet, dass** die erste und die zweite Lasche (44, 46) an Rändern der Luftauslassöffnung (18) bereitgestellt sind, wobei die erste und die zweite Lasche (44, 46) konfiguriert sind, um an einem Oberteil des Magnetventils (8) anzuliegen und um das Magnetventil (8) in den Ventilblock (4) hineinzudrücken.

2. Ventilbefestigungsvorrichtung (30, 300) nach Anspruch 1,
wobei der erste Schenkel (36) und der zweite Schenkel (38) mit dem Plattenkörper (34) einstückig ausgebildet sind.

3. Ventilbefestigungsvorrichtung (30, 300) nach einem der vorstehenden Ansprüche,
wobei die Schnappschnittstelle (52, 55) als ein Vorsprung ausgebildet ist, der von dem Seitenabschnitt (50, 54) des Ventilblocks (4) vorspringt, und
wobei der erste Schenkel (36) konfiguriert ist, um sich nach außen zu biegen, wenn er entlang des Vorsprungs (52, 55) bewegt wird, und um danach zurückzuspringen, sodass das Schnappelement (40) in dem montierten Zustand den Vorsprung (52, 55) in Eingriff nimmt.

4. Ventilbefestigungsvorrichtung (30, 300) nach Anspruch 3,
wobei das Schnappelement (40) als eine Aussparung ausgebildet ist, die in dem jeweiligen ersten Schenkel (36) der Ventilbefestigungsvorrichtung (30, 300) bereitgestellt ist.

5. Ventilbefestigungsvorrichtung (30, 300) nach einem der Ansprüche 1 bis 3,
wobei die Schnappschnittstelle (52, 55) als eine Aussparung ausgebildet ist, die in dem jeweiligen Seitenabschnitt (50, 54) des Ventilblocks (4) bereitgestellt ist, und
wobei der erste Schenkel (36) mit dem Schnappelement (40) konfiguriert ist, um sich mindestens teilweise nach außen zu biegen, wenn er entlang des Seitenabschnitts (50, 54) des Ventilblocks (4) bewegt wird, und danach zurückzuspringen, sodass das Schnappelement (40) in dem montierten Zustand die Aussparung (52, 55) in Eingriff nimmt.

6. Ventilbefestigungsvorrichtung (30, 300) nach einem der Ansprüche 3 oder 5,
wobei das Schnappelement (40) als ein Vorsprung ausgebildet ist, der von dem ersten Schenkel (36) zu der gegenüberliegenden Seite (39) des Plattenkörpers (34) vorspringt.

7. Ventilbefestigungsvorrichtung (30, 300) nach einem der vorstehenden Ansprüche,
wobei das Schnappelement ein erstes Schnappelement (40) ist, das an dem ersten Schenkel (36) bereitgestellt ist, und die Schnappschnittstelle eine erste Schnappschnittstelle (52) ist, die an einem ersten Seitenabschnitt (50) des Ventilblocks (4) bereitgestellt ist, und
wobei der zweite Schenkel (38) ein zweites Schnappelement (42) aufweist, das konfiguriert ist, um eine entsprechende zweite Schnappschnittstelle (55) in Eingriff zu nehmen, wenn sie sich in dem montierten Zustand befinden,
wobei die zweite Schnappschnittstelle (55) an einem zweiten Seitenabschnitt (54) des Ventilblocks (4) gegenüberliegend dem ersten Seitenabschnitt (50) bereitgestellt ist.

8. Ventilbefestigungsvorrichtung (30, 300) nach einem der vorstehenden Ansprüche,
wobei der erste Schenkel (36) eine erste Länge (L1) aufweist und der zweite Schenkel (38) eine zweite Länge (L2) zum Anbringen des Magnetventils (8, 12) aufweist, und
der erste Schenkel (36) eine erste Anlageoberfläche (58) zum Anliegen an dem Ventilblock (4) umfasst, wenn sie sich in dem montierten Zustand befinden, und der zweite Schenkel (38) eine zweite Anlageoberfläche (60) zum Anliegen an dem Ventilblock (4) umfasst, wenn sie sich in dem montierten Zustand befinden.

9. Ventilbefestigungsvorrichtung (30, 300) nach einem der vorstehenden Ansprüche, wobei der Plattenkörper (34), der erste Schenkel (36) und der zweite Schenkel (38) mittels Biegen aus einer Metallplatte ausgebildet sind.

10. Ventilbefestigungsvorrichtung (30, 300) nach einem der vorstehenden Ansprüche,
wobei sich der erste Schenkel (36) und der zweite Schenkel (38) im Wesentlichen vollständig entlang der ersten Seite (37) beziehungsweise der zweiten Seite (39) des Plattenkörpers (34) erstrecken.

11. Ventilbefestigungsvorrichtung (30, 300) nach einem der vorstehenden Ansprüche,
ferner umfassend eine Vielzahl von Durchgangslöchern (20), die in dem Plattenkörper (34) ausgebildet sind, zum Aufnehmen von Schrauben (22) zum Schrauben der Ventilbefestigungsvorrichtung (30, 300) an den Ventilblock (4).

12. Magnetventilanordnung (32) für das automatisierte Schaltgetriebe, umfassend:
einen Ventilblock (4), der eine Schnappschnittstelle aufweist,
eine Vielzahl von Magnetventilen (8, 12), die in jeweiligen Aussparungen (47) des Ventilblocks (4) aufgenommen sind, und
mindestens eine Ventilbefestigungsvorrichtung (30, 300) nach einem der vorstehenden Ansprüche, die an dem Ventilblock (4) durch eine Schnappverbindung zwischen dem Schnappelement (40) und der entsprechenden Schnappschnittstelle (52, 55) angebracht ist,
wobei die Schnappschnittstelle (52, 55) an einem Seitenabschnitt (50, 54) des Ventilblocks (4) bereitgestellt ist, der sich im Wesentlichen parallel zu dem jeweiligen ersten Schenkel (36) der Ventilbefestigungsvorrichtung (30, 300) erstreckt, wenn sie sich in dem montierten Zustand befinden.

13. Magnetventilanordnung (32) nach Anspruch 12,
wobei die Schnappschnittstelle (52, 55) als ein Vorsprung ausgebildet ist, der zu dem jeweiligen Seitenabschnitt (50, 54) des Ventilblocks (4) geneigt ist und von diesem vorspringt, sodass der jeweilige erste Schenkel (36), der das Schnappelement (40) aufweist, in einer kontinuierlich zunehmenden Weise zunächst nach außen gebogen wird, wenn er entlang des Vorsprungs (52, 55) bewegt wird, und danach zurückspringt, sodass das Schnappelement (40) in dem montierten Zustand den Vorsprung (52, 55) in Eingriff nimmt.

14. Magnetventilanordnung (32) nach Anspruch 12 oder 13,
wobei der Ventilblock (4) eine Vielzahl von Schraubgewindebohrungen (48) umfasst, die der Vielzahl von Durchgangslöchern (20) in dem Plattenkörper (34) entsprechen, zum Aufnehmen von Schrauben (22), die durch die Durchgangslöcher (20) hindurch bereitgestellt sind.

15. Nutzfahrzeug, umfassend eine Magnetventilanordnung (32) nach einem der Ansprüche 12 bis 14.

16. Verfahren zum Montieren einer Magnetventilanordnung (32) nach Anspruch 14, das Verfahren umfassend die Schritte:
- Anordnen von mindestens einem aus einer Vielzahl von Magnetventilen (8, 12) in einer Aussparung (47) eines Ventilblocks (4),
- Befestigen des Magnetventils an dem Ventilblock (4) durch eine Ventilbefestigungsvorrichtung (30, 300),
- Löten einer Flexfolie an das Magnetventil (8, 12), und
- sicheres Anbringen des Magnetventils (8, 12) an dem Ventilblock (4) durch eine Vielzahl von Schraubgewindebohrungen (48), die einer Vielzahl von Durchgangslöchern (20) in einem Plattenkörper (34) entsprechen, zum Aufnehmen von Schrauben (22), die durch die Durchgangslöcher (20) hindurch bereitgestellt sind.

17. Verfahren nach Anspruch 16, ferner umfassend den Schritt:
- Montieren einer Funktionskomponente (56) an dem Plattenkörper (34) vor dem sicheren Anbringen des Magnetventils (8, 12) an dem Ventilblock (4) durch die Vielzahl von Schrauben (20), die die Schraubgewindebohrungen (48) in Eingriff nehmen.

## Revendications

1. Dispositif de fixation de soupape (30, 300) permettant de fixer des électrovannes (8, 12) à un bloc de soupapes (4) pour une transmission manuelle automatisée, le dispositif de fixation (30, 300) comprenant :
un corps de plaque (34) présentant une ouverture de sortie d'air (18) pour octroyer l'accès auxdites électrovannes (8, 12),
au moins une première patte (36) au niveau d'un premier côté (37) dudit corps de plaque (34) s'étendant sensiblement perpendiculairement à celui-ci, et
au moins une seconde patte (38) au niveau d'un second côté (39) dudit corps de plaque (34) opposé audit premier côté (37) s'étendant sensiblement perpendiculairement à celui-ci,
dans lequel la première patte (36) et la seconde patte (38) sont conçues pour fixer lesdites électrovannes (8, 12),
dans lequel ladite première patte (36) présente un élément d'encliquetage (40) conçu pour venir en prise avec une interface d'encliquetage correspondante (52, 55) lorsqu'elle est dans un état monté,
dans lequel l'interface d'encliquetage (52, 55) est prévue au niveau d'une partie latérale (50, 54) dudit bloc de soupapes (4) s'étendant sensiblement parallèlement à la première patte (36) lorsqu'il est à l'état monté, et dans lequel ledit corps de plaque (34) comprend au moins deux attaches sollicitées par ressort (44, 46), dans lequel les au moins deux attaches sollicitées par ressort comportent une première attache (44) et une seconde attache (46), **caractérisé en ce que** les première et seconde attaches (44, 46) sont fournies au niveau des bords de ladite ouverture d'évacuation d'air (18), dans lequel les première et seconde attaches (44, 46) sont conçues pour venir en butée contre une partie supérieure de l'électrovanne (8) et pour pousser l'électrovanne (8) dans le bloc de soupapes (4).

2. Dispositif de fixation de soupape (30, 300) selon la revendication 1,
dans lequel la première patte (36) et la seconde patte (38) sont formées d'un seul tenant avec ledit corps de plaque (34).

3. Dispositif de fixation de soupape (30, 300) selon l'une quelconque des revendications précédentes,
dans lequel l'interface d'encliquetage (52, 55) est formée comme une saillie qui fait saillie à partir de ladite partie latérale (50, 54) du bloc de soupapes (4), et
dans lequel ladite première patte (36) est conçue pour se plier vers l'extérieur lorsqu'elle est déplacée le long de la saillie (52, 55) et pour rebondir ensuite de telle sorte que l'élément d'encliquetage (40) vient en prise avec la saillie (52, 55) à l'état monté.

4. Dispositif de fixation de soupape (30, 300) selon la revendication 3,
dans lequel l'élément d'encliquetage (40) est formé comme évidement prévu dans la première patte respective (36) du dispositif de fixation de soupape (30, 300).

5. Dispositif de fixation de soupape (30, 300) selon l'une quelconque des revendications 1 à 3,
dans lequel l'interface d'encliquetage (52, 55) est formée comme un évidement prévu dans la partie latérale respective (50, 54) du bloc de soupapes (4), et
dans lequel la première patte (36) présentant l'élément d'encliquetage (40) est conçue pour se plier au moins partiellement vers l'extérieur lorsqu'elle est déplacée le long de ladite partie latérale (50, 54) du bloc de soupapes (4) et pour rebondir ensuite de telle sorte que l'élément d'encliquetage (40) vient en prise dans l'évidement (52, 55) à l'état monté.

6. Dispositif de fixation de soupape (30, 300) selon l'une quelconque des revendications 3 ou 5,
dans lequel l'élément d'encliquetage (40) est formé comme une saillie qui fait saillie de la première patte (36) vers le côté opposé (39) du corps de plaque (34).

7. Dispositif de fixation de soupape (30, 300) selon l'une quelconque des revendications précédentes,
dans lequel l'élément d'encliquetage est un premier élément d'encliquetage (40) prévu au niveau de la première patte (36) et l'interface d'encliquetage est une première interface d'encliquetage (52) prévue au niveau d'une première partie latérale (50) dudit bloc de soupapes (4), et
dans lequel ladite seconde patte (38) présente un second élément d'encliquetage (42) conçu pour venir en prise avec une seconde interface d'encliquetage correspondante (55) lorsqu'elle est à l'état monté,
ladite seconde interface d'encliquetage (55) est prévue au niveau d'une seconde partie latérale (54) dudit bloc de soupapes (4) à l'opposé de la première partie latérale (50).

8. Dispositif de fixation de soupape (30, 300) selon l'une quelconque des revendications précédentes,
dans lequel ladite première patte (36) présentant une première longueur (L1) et ladite seconde patte (38) présentant une seconde longueur (L2) pour fixer ladite électrovanne (8, 12), et
ladite première patte (36) comprend une première surface de butée (58) pour venir en butée contre ledit bloc de soupapes (4) lorsqu'il est à l'état monté, et ladite seconde patte (38) comprend une seconde surface de butée (60) pour venir en butée contre ledit bloc de soupapes (4) lorsqu'il est à l'état monté.

9. Dispositif de fixation de soupape (30, 300) selon l'une quelconque des revendications précédentes, dans lequel le corps de plaque (34), la première patte (36) et la seconde patte (38) sont formés à partir d'une plaque métallique par pliage.

10. Dispositif de fixation de soupape (30, 300) selon l'une quelconque des revendications précédentes,
dans lequel ladite première patte (36) et ladite seconde patte (38) s'étendent sensiblement complètement le long dudit premier côté (37) et dudit second côté (39) dudit corps de plaque (34), respectivement.

11. Dispositif de fixation de soupape (30, 300) selon l'une quelconque des revendications précédentes,
comprenant en outre une pluralité de trous traversants (20) formés dans ledit corps de plaque (34) pour recevoir des vis (22) pour visser ledit dispositif de fixation de soupape (30, 300) audit bloc de soupapes (4).

12. Agencement d'électrovannes (32) pour une transmission manuelle automatisée, comprenant :
un bloc de soupapes (4) présentant une interface d'encliquetage,
une pluralité d'électrovannes (8, 12) reçues dans des évidements (47) respectifs dudit bloc de soupapes (4), et
au moins un dispositif de fixation de soupape (30, 300) selon l'une quelconque des revendications précédentes, fixé audit bloc de soupapes (4) par une liaison par encliquetage entre l'élément d'encliquetage (40) et l'interface d'encliquetage (52, 55) correspondante,
dans lequel l'interface d'encliquetage (52, 55) est fournie au niveau d'une partie latérale (50, 54) dudit bloc de soupapes (4) s'étendant sensiblement parallèlement à la première patte respective (36) dudit dispositif de fixation de soupape (30, 300) lorsqu'il est à l'état monté.

13. Agencement d'électrovannes (32) selon la revendication 12,
dans lequel l'interface d'encliquetage (52, 55) est formée comme une saillie inclinée par rapport à la partie latérale respective (50, 54) du bloc de soupapes (4) et faisant saillie à partir de celle-ci, de telle sorte que la première patte (36) respective présentant l'élément d'encliquetage (40) est initialement pliée vers l'extérieur d'une manière continuellement croissante lorsqu'elle est déplacée le long de la saillie (52, 55) et rebondit ensuite de telle sorte que l'élément d'encliquetage (40) vient en prise avec la saillie (52, 55) à l'état monté.

14. Agencement d'électrovannes (32) selon la revendication 12 ou 13,
dans lequel ledit bloc de soupapes (4) comprend une pluralité de trous filetés (48) correspondant à ladite pluralité de trous traversants (20) dans ledit corps de plaque (34) pour recevoir des vis (22) fournies à travers lesdits trous traversants (20).

15. Véhicule utilitaire comprenant un agencement d'électrovannes (32) selon l'une quelconque des revendications 12 à 14.

16. Procédé de montage d'un agencement d'électrovannes (32) selon la revendication 14, le procédé comprenant les étapes consistant à :
- agencer au moins l'une parmi une pluralité d'électrovannes (8, 12) dans un évidement (47) d'un bloc de soupapes (4),
- fixer l'électrovanne au bloc de soupapes (4) par un dispositif de fixation de soupape (30, 300),
- souder une feuille souple à l'électrovanne (8, 12), et
- fixer solidement l'électrovanne (8, 12) audit bloc de soupapes (4) par une pluralité de trous filetés (48) correspondant à ladite pluralité de trous traversants (20) dans ledit corps de plaque (34) pour recevoir des vis (22) fournies à travers lesdits trous traversants (20).

17. Procédé selon la revendication 16, comprenant en outre l'étape consistant à :
- monter un composant fonctionnel (56) sur le corps de plaque (34) avant de fixer solidement l'électrovanne (8, 12) au bloc de soupapes (4) par la pluralité de vis (20) venant en prise avec les trous filetés (48).
